Europäisches Patentamt

European Patent Office

Office européen des brevets

(19)

(11) Veröffentlichungsnummer: **0 025 485**
**B1**

(12) **EUROPÄISCHE PATENTSCHRIFT**

(45) Veröffentlichungstag der Patentschrift:
07.09.83

(21) Anmeldenummer: **80104013.0**

(22) Anmeldetag: **11.07.80**

(51) Int. Cl.³: **G 01 B 5/03,** G 01 B 7/03,
G 01 B 11/03

(54) **Einrichtung zur Messwerterfassung an Prüflingen.**

(30) Priorität: **15.09.79 DE 2937431**

(43) Veröffentlichungstag der Anmeldung:
**25.03.81 Patentblatt 81/12**

(45) Bekanntmachung des Hinweises auf die Patenterteilung:
**07.09.83 Patentblatt 83/36**

(84) Benannte Vertragsstaaten:
**CH FR GB IT LI SE**

(56) Entgegenhaltungen:
**DE-A-2 820 813**
**FR-A-2 317 631**
**FR-A-2 384 230**
**GB-A-2 005 022**
**GB-A-2 006 435**

(73) Patentinhaber: **ERNST LEITZ WETZLAR GMBH,**
**Ernst-Leitz-Strasse 30 Postfach 20 20,**
**D-6330 Wetzlar 1 (DE)**

(72) Erfinder: **Fritsche, Rainer, Dr., Vor der Schanze,**
**D-6333 Braunfels (DE)**
Erfinder: **Jacoby, Hans-Dieter, Dr., Finkenweg 9,**
**D-6331 Asslar-Werdorf (DE)**
Erfinder: **Schuster, Erich, Friedensstrasse 10,**
**D-6331 Hüttenberg (DE)**

Einrichtung zur Meßwerterfassung an Prüflingen

Die Erfindung betrifft eine Einrichtung zur Meßwerterfassung an Prüflingen unter Verwendung eines elastisch gelagerten, relativ zu den Prüflingen bewegbaren mechanischen Tasters, wenigstens eines diesem zugeordneten lageempfindlichen Gebers sowie mindestens eines eine Relativbewegung des Prüflings erfassenden Meßwertgebers mit nachgeschaltetem Zähler, bei der im Augenblick des Zusammentreffens von Taster und Prüfling vom lageempfindlichen Geber ein Signal erzeugt wird und dieses dann zum Festhalten des im Augenblick des Zusammentreffens vorhandenen Meßwertes am Meßwertgeber in einem Speicher benützt wird.

In der nicht vorveröffentlichten Patentanmeldung DE-A-2 820 813 werden derartige Einrichtungen beschrieben.

Nachteil einer solch hochgenauen Meßeinrichtung ist, daß der Meßdatenabruf außer durch das Signal aus der Prüflingsantastung auch durch andere Signale — beispielsweise durch Schallwellen als Störsignale — erfolgen kann.

Der vorliegenden Erfindung liegt daher die Aufgabe zugrunde, Einrichtungen der obengenannten Art weiter auszugestalten und so zu vervollkommnen, daß Störungen bei der Erzeugung der Steuersignale vermieden werden.

Die Lösung dieser Aufgabe bei Einrichtungen der eingangs genannten Art gelingt dadurch, daß an dem Taster als lageempfindlicher Geber wenigstens ein Schwingungs- oder Beschleunigungsaufnehmer vorgesehen ist und daß dem Schwingungs- oder Beschleunigungsaufnehmer eine Selektierstufe zugeordnet ist, welche auftretende Störsignale vom Meßsignal selektiert und den Datenfluß zwischen Speicher und einem diesem nachgeschalteten Rechner steuert.

Es wird vorgeschlagen, daß der Schwingungs- oder Beschleunigungsaufnehmer ein Mikrofon ist.

Es kann aber auch als Schwingungs- oder Beschleunigungsaufnehmer ein piezo-elektrisches Element vorgesehen sein.

Der Schwingungs- oder Beschleunigungsaufnehmer kann aber auch aus einem kapazitivem oder induktivem Geber bestehen. Schließlich kann als Schwingungs- oder Beschleunigungsaufnehmer ein elektro-optischer Geber vorgesehen sein.

Damit die beim Antasten des Prüflings in den Meßachsen x, y und z erzeugten Schwingungen möglichst gleiche Amplitude haben, wird vorgeschlagen, daß der Schwingungs- oder Beschleunigungsaufnehmer 45° zu allen Meßachsen geneigt angeordnet ist.

Damit ein solches Störsignal vom tatsächlichen Antastsignal unterschieden und separiert werden kann, wird in weiterer Ausbildung der Erfindung vorgeschlagen, dem Schwingungs- oder Beschleunigungsaufnehmer eine Schaltung zuzuordnen, welche auftretende Störsignale vom Meßsignal selektiert und den Datenfluß zwischen dem Speicher und einem diesem nachgeschalteten Rechner steuert.

Eine Schaltung, die ein Störsignal vom tatsächlichen Antastsignal unterscheidet und trennt, kann aus einer ersten Doppelweggleichrichterschaltung, einem Differenzierer, einer zweiten Doppelweggleichrichterschaltung, einem Summierverstärker und einer Ablaufsteuerstufe bestehen. In dieser Schaltung wird das Ausgangssignal des Schwingungs- oder Beschleunigungsaufnehmers der ersten Doppelweggleichrichterschaltung nach Durchlaufen eines Differenzierers zugeführt. Die Ausgänge der Doppelweggleichrichterschaltung sind mit den Eingängen des Summierverstärkers verbunden, dem die Ablaufsteuerstufe nachgeschaltet ist.

In weiterer Ausbildung der Erfindung kann zusätzlich eine Schaltstufe vorgesehen sein, welche aus dem Ausgangssignal des Schwingungs- oder Beschleunigungsaufnehmers und dem Ausgangssignal des Summierverstärkers sowie der Geschwindigkeitsinformation aus der Bewegung des Tisches und des Tasters Korrekturwerte bildet, die dem Rechner und der Anzeige zugeführt werden.

Zur Durchführung der gleichen Maßnahme kann in einem Abstand zum ersten Schwingungs- oder Beschleunigungsaufnehmer und zum Taster ein zweiter Schwingungs- oder Beschleunigungsaufnehmer montiert sein, dessen Ausgangssignale in einer zweiten Selektierstufe verarbeitet werden und mit den Ausgangssignalen der ersten Selektierstufe einer Blockierstufe zugeführt werden, welche nur bei Vorliegen eines Signals aus der ersten Selektierstufe und Fehlen eines Signals aus der zweiten Selektierstufe den Datenfluß zwischen Speicher und Rechner freigibt.

In der Zeichnung ist die Erfindung in Ausführungsbeispielen schematisch dargestellt und im folgenden näher beschrieben. Es zeigt

Fig. 1 eine erfindungsgemäße Einrichtung mit Selektierstufe,

Fig. 2 ein Schaltungsbeispiel einer Selektierstufe,

Fig. 3 eine erfindungsgemäße Einrichtung mit einem zweiten Schwingungs- oder Beschleunigungsaufnehmer und

Fig. 4 ein Beispiel für einen elektro-optischen Geber als Schwingungs- oder Beschleunigungsaufnehmer.

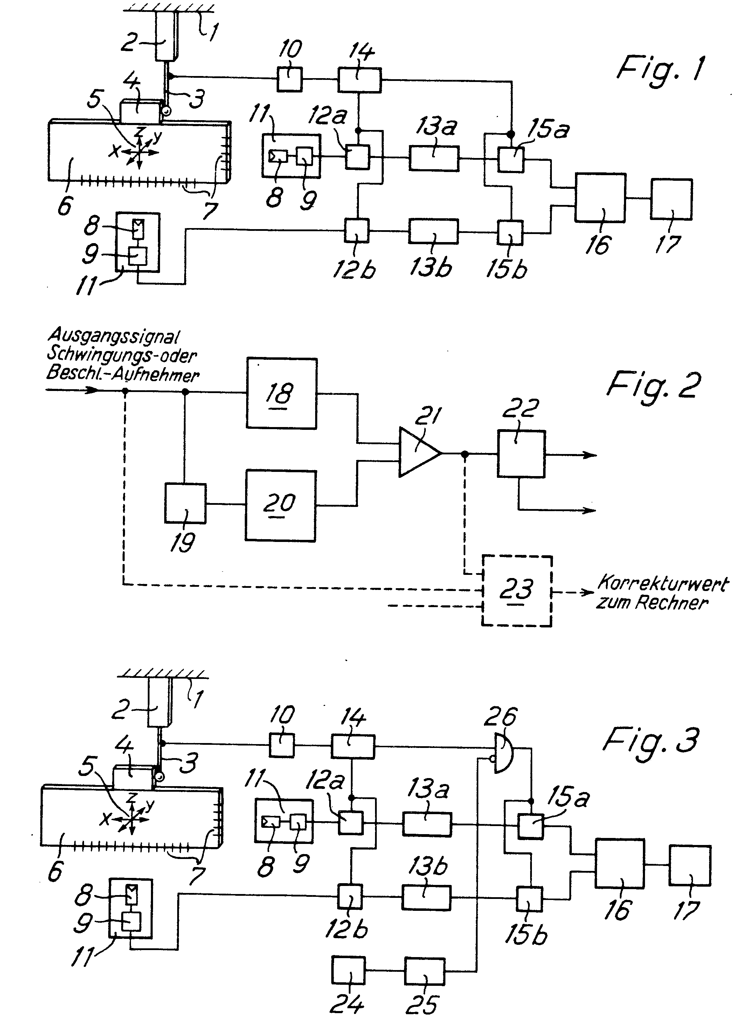

In Fig. 1 ist ein an sich bekanntes, als Überlastungssicherung wirkendes Knickgelenk 2 mit einer Halterung 1 verbunden. Im Knickgelenk 2 ist ein einstückiger Taster 3 gelagert, mit dem ein Prüfling 4 zur Vermessung angetastet werden soll. Dazu ist dieser auf einem in den Richtungen der Pfeile 5, die auch die Meßachsen x, y, z darstellen, verstellbaren Meßtisch 6 befestigt. Der Meßtisch 6 ist in den Richtungen der

[...]eßachsen x, y, z mit Teilungen 7 versehen, welche zusammen mit foto-elektrischen Empfängersystemen 8 sowie Zählern 9 Bestandteile je eines Meßwertgebers 11 sind. Der Übersichtlichkeit wegen sind nur zwei Meßwertgeber 11 dargestellt. Bei Verschiebung des Meßtisches 6 in einer der Pfeilrichtungen werden im entsprechenden Meßwertgeber 11 elektrische Impulse erzeugt, die vom im Meßwertgeber 11 befindlichen Zähler 9 gezählt werden.

Zum Festhalten der Meßwerte, die zum Zeitpunkt der Berührung zwischen Taster 3 und Prüfling 4 in den Meßwertgebern 11 anstehen, ist der Taster 3 mit einem Schwingungs- oder Beschleunigungsaufnehmer 10 — beispielsweise einem Mikrofon, einem piezoelektrischen Element, einem kapazitiven oder induktiven Geber — verbunden, der vorzugsweise 45° zu den Meßachsen x, y, z geneigt außen am Taster 3 angesetzt ist, und der im Berührungsaugenblick ein Signal abgibt, welches die Zähler 9 in den Meßwertgebern stoppt und gleichzeitig die Relativbewegung zwischen Prüfling 4 und Tasteinrichtung abschaltet.

Zur Zwischenspeicherung der in den Zählern 9 anstehenden Werte sind Speicher 13a und 13b über Torstufen 12a und 12b an die Zähler 9 geschaltet. Die Steuerung der Torstufen 12a und 12b kann dabei aus den Signalen des einen Ausgangs einer Selektierstufe 14 abgeleitet werden. Der jeweils in den Zählern 9 anstehende Wert kann beispielsweise bei Beginn des Schwingungsvorgangs in die Speicher 13a und 13b übernommen werden.

Die weiter unten noch näher zu beschreibende Selektierstufe 14 ist dem Schwingungs- oder Beschleunigungsaufnehmer 10 zugeordnet. Sie selektiert auftretende, möglicherweise die Übernahme eines nicht durch die Antastung festgelegten Meßwertes in den Rechner 16 verursachende Signale und erzeugt nach Separierung des Störsignals vom Antastsignal ein Ausgangssignal, welches durch Öffnung von Toren 15a und 15b in den Speichern 13a und 13b abgelegten Meßwert zur Weiterverarbeitung im Rechner 16 freigibt. Das dort ermittelte Endergebnis wird einer Anzeigevorrichtung 17 zugeführt.

Es hat sich herausgestellt, daß sich die beim Antastvorgang erzeugten Schwingungen von denen durch eine Störung hervorgerufenen grundsätzlich unterscheiden. Dieser Unterschied macht es möglich, diese Schwingungen so voneinander zu trennen, daß nur aus dem tatsächlichen Antastvorgang hervorgehende Signale die Meßwerte für Rechenvorgänge und/oder zur Anzeige freigeben. Ein Beispiel für eine solches bewirkende Selektierstufe 14 ist in Fig. 2 gegeben.

In einer solchen Selektierstufe wird das Ausgangssignal des Schwingungs- oder Beschleunigungsaufnehmers 10 einem ersten und einem zweiten Schaltungszweig zugeführt. Dabei besteht der erste Schaltungszweig aus einer an sich bekannten Vollweggleichrichterschaltung 18, wie sie beispielsweise im Springer-Verlag 1978 erschienenen Buch von U. Tietze und Ch. Schenk, »Halbleiterschaltungstechnik«, S. 656, Abb. 25.11, oder im »Handbook of Operational Amplifier Applications« der Burr Brown Research Corp., Tucson, Ariz., 1963, beschrieben ist.

Der zweite Schaltungszweig der Selektierstufe 14 enthält einen Differenzierer 19 sowie eine weitere Vollweggleichrichterschaltung 20.

Sowohl das differenzierte als auch das undifferenzierte Signal werden in Vollweggleichrichterschaltungen 18, 20 einer Doppelweggleichrichtung unterzogen. Die an den Ausgängen dieser Schaltungen 18 und 20 anstehenden Signale werden über einen weiteren Summierverstärker 21 nochmals summiert.

Das Ausgangssignal des Summierverstärkers 21 hat immer dann einen von Null verschiedenen Wert, wenn ein Schwingungsvorgang abläuft. Es hat sich gezeigt, daß die durch die Antastung des Prüflings 4 hervorgerufene Schwingung als abklingende Schwingung beschreibbar ist, wogegen die durch eine Störung erzeugte, vom Schwingungsverlauf her mehr sporadisch und statistisch auftritt.

Am Ausgang des Summierverstärkers 21 tritt daher bei Vorhandensein einer Störung ein von Null verschiedenes Ausgangssignal nur sehr kurzfristig und zuweilen unterbrochen auf. Es wird daher mit einer dem Summierverstärker 21 nachgeschalteten Ablaufsteuerstufe 22 abgefragt, ob während einer bestimmten Zeit — beispielsweise 10 msec — ununterbrochen ein von Null verschiedenes Ausgangssignal am Ausgang des Summierverstärkers 21 angelegen hat. Wenn dies der Fall war, hat es sich um ein durch die Antastung erzeugtes Signal gehandelt. Ein dann von der Auflaufsteuerstufe 22 erzeugtes Signal öffnet die Tore 15a und 15b, womit der Datenfluß zwischen den Speichern 13a und 13b und dem Rechner 16 freigegeben wird.

Ist das Signal am Ausgang des Summierverstärkers 21 unterbrochen, hat es sich um eine Störung gehandelt. Das dann an der Ablaufsteuerstufe 22 anstehende Signal öffnet die Tore 15a und 15b nicht, und es erfolgt keine Übermittlung der im Speicher 13a und 13b abgelegten Meßwerte zum Rechner 16.

Wie in Fig. 2 gestrichelt dargestellt, kann der Selektierstufe 14 eine Schaltung 23 zugeordnet sein, die Korrekturwerte bildet, die dem Rechner 16 und der Anzeige 17 zugeführt werden. Zur Bildung des Korrekturwertes werden der Schaltung 23 die Ausgangssignale des Schwingungs- oder Beschleunigungsaufnehmers 10 sowie die Ausgangssignale des Summierverstärkers 21 zugeführt. Außerdem erhält die Schaltung 23 noch eine Geschwindigkeitsinformation über die Bewegung des Tisches 6 und/oder des Tasters 3.

Ein weiteres Beispiel zur Ausscheidung von Signalen, welche möglicherweise die Übernahme eines nicht durch die Antastung des Prüflings 4 festgelegten Meßwertes in den Rechner 16 verursachen, ist in Fig. 3 gezeigt.

Hier ist in einem möglichst geringen Abstand zum ersten Schwingungs- oder Beschleunigungsaufnehmer 10 und zum Taster 3 ein zweiter Schwingungs- oder Beschleunigungsaufnehmer 24 montiert. Beiden Aufnehmern 10 bzw. 24 ist je eine Selektierstufe 14 bzw. 25 nachgeschaltet. Die Selektierstufe 25 unterscheidet sich von der Selektierstufe 14 dadurch, daß sie lediglich einen Ausgang besitzt. Das vom zweiten Schwingungs- oder Beschleunigungsaufnehmer 24 kommende Signal wird von der Selektierstufe 25 ausgewertet und als Störungsmeldung für eine vorgegebene Zeit gespeichert. Dadurch bleibt eine Blockierstufe 26, deren einer Eingang mit der Selektierstufe 14 und deren anderer Eingang mit der Selektierstufe 25 verbunden ist, geschlossen. Damit wird auch die Weitergabe der Daten aus den Speichern 13a bzw. 13b zum Rechner 16 und/oder Anzeige 17 blockiert, da auch die Tore 15a und 15b geschlossen bleiben. Die Blockierstufe 26 ist nur dann durchlässig, wenn ein Signal aus dem Antastvorgang, d. h. aus der Selektierstufe 14, vorliegt.

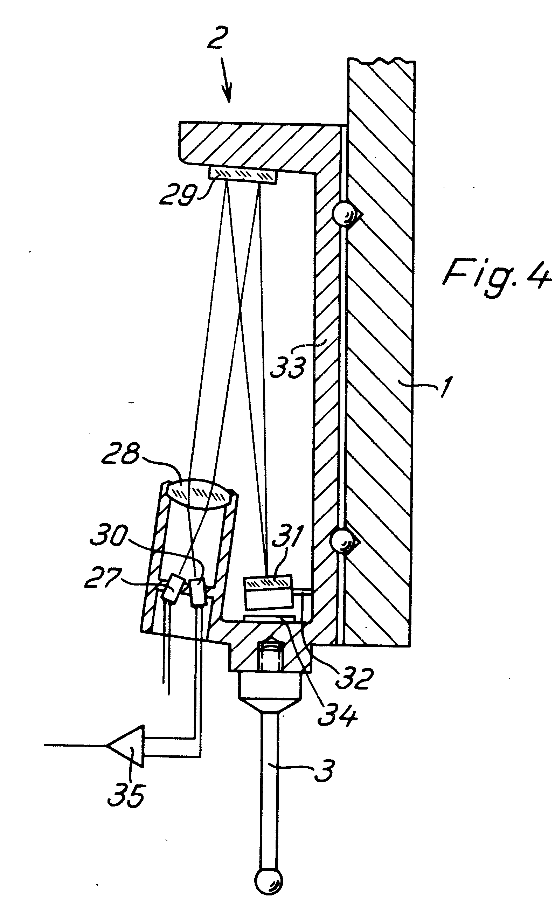

Im in Fig. 4 schematisch dargestellten Beispiel für einen elektro-optischen Geber als Schwingungs- oder Beschleunigungsaufnehmer trägt das feste Gehäuse 1 ein an sich bekanntes Knickgelenk 2. Das Knickgelenk 2 enthält ein elektro-optisches Meßsystem, welches aus einem ortsfest montierten Lichtsender 27, einer ortsfesten Optik 28, einem fest montierten Spiegel 29, einem ortsfesten Differenzfotoempfänger 30 sowie einem beweglichen Spiegel 31, der über ein Federgelenk 32 an einem Teil 33 des Knickgelenkes 2 angebracht ist.

Die oben beschriebene Einrichtung arbeitet wie folgt: Der Lichtsender 27, z. B. eine GaAS-Diode, ist im Brennpunkt der Optik 28 angeordnet, so daß das vom Lichtsender 27 ausgehende Licht in parallelem Strahlengang auf den festen Spiegel 29 und den beweglichen Spiegel 31 fällt. Spiegel 31 reflektiert das Licht. Die Optik 28 fokussiert es auf den Differenzfotoempfänger 30.

Im Ruhezustand der Einrichtung wird der reflektierte Lichtstrahl mittig auf den Differenzfotoempfänger 30 fokussiert. Dabei kann eine Spule 34 zur Feineinstellung vorgesehen sein.

Bei Berührung des Tasters 3 mit dem Werkstück 4 wird der federnd gelagerte Spiegel 31 in Schwingungen versetzt. Durch die dabei erfolgende Auslenkung des Lichtflecks auf dem Differenzfotoempfänger 31 wird an dessen einem Ausgang ein größeres und an dessen anderem Ausgang ein kleineres Signal abgegeben. Beide Signale werden einem nachgeschalteten Differenzverstärker 35 zugeführt, dessen Ausgangssignal, wie bereits oben beschrieben, ausgewertet wird.

## Patentansprüche

1. Einrichtung zur Meßwerterfassung an Prüflingen (4) mit einem elastisch gelagerten, relativ zu den Prüflingen (4) bewegbaren mechanischen Taster (3), wenigstens einem diesem zugeordneten lageempfindlichen Geber (10) sowie mit mindestens einem eine Relativbewegung des Prüflings (4) erfassenden Meßwertgeber (11) mit nachgeschaltetem Zähler (9), bei der im Augenblick des Zusammentreffens von Taster (3) und Prüfling (4) vom lageempfindlichen Geber (10) ein Signal erzeugt wird und dieses dann zum Festhalten des im Augenblick des Zusammentreffens vorhandenen Meßwertes am Meßwertgeber (11) in einem Speicher (13a, 13b) benutzt wird, dadurch gekennzeichnet, daß an dem Taster (3) als lageempfindlicher Geber wenigstens ein Schwingungs- oder Beschleunigungsaufnehmer (10) vorgesehen ist, dem eine Selektierstufe (14) zugeordnet ist, welche auftretende Störsignale vom Meßsignal selektiert und den Datenfluß zwischen dem Speicher (13) und einem diesem nachgeschalteten Rechner (16) steuert.

2. Einrichtung nach Anspruch 1, dadurch gekennzeichnet, daß der Schwingungs- oder Beschleunigungsaufnehmer (10) ein Mikrofon ist.

3. Einrichtung nach Anspruch 1, dadurch gekennzeichnet, daß der Schwingungs- oder Beschleunigungsaufnehmer (10) aus einem piezo-elektrischen Element besteht.

4. Einrichtung nach Anspruch 1, dadurch gekennzeichnet, daß als Schwingungs- oder Beschleunigungsaufnehmer (10) ein kapazitiver Geber vorgesehen ist.

5. Einrichtung nach Anspruch 1, dadurch gekennzeichnet, daß als Schwingungs- oder Beschleunigungsaufnehmer (10) ein induktiver Geber verwendet ist.

6. Einrichtung nach Anspruch 1, dadurch gekennzeichnet, daß als Schwingungs- oder Beschleunigungsaufnehmer (10) ein optischer Geber verwendet ist.

7. Einrichtung nach einem der Ansprüche 1 bis 6, dadurch gekennzeichnet, daß der Schwingungs- oder Beschleunigungsaufnehmer (10) 45° zu allen Meßachsen (x, y, z) des Tasters (3) geneigt angeordnet ist.

8. Einrichtung nach Anspruch 1, dadurch gekennzeichnet, daß die Selektierstufe (14) aus einer ersten Doppelweggleichrichterschaltung (18), einem Differenzierer (18), einer zweiten Doppelweggleichrichterschaltung (20), einem Summierverstärker (21) und einer Ablaufsteuerstufe (22) besteht, bei welcher das Ausgangssignal des Schwingungs- oder Beschleunigungsnehmers (10) der ersten Doppelweggleichrichterschaltung (20) nach Durchlaufen des Differenzierers (19) zugeführt wird und in welcher die Ausgänge der Doppelweggleichrichterschaltungen (18, 20) mit den Eingängen des Summierverstärkers verbunden sind, dem die Ablaufsteuerstufe (22) nachgeschaltet ist.

9. Einrichtungen nach den Ansprüchen 1 und 8, dadurch gekennzeichnet, daß zusätzlich eine Schaltstufe (23) vorgesehen ist, welche aus dem Ausgangssignal des Schwingungs- oder Be-

...nleunigungsnehmers (10) und dem Ausgangssignal des Summierverstärkers (21) sowie der
Geschwindigkeitsinformation aus der Bewegung
des Tisches (6) und des Tasters (3) Korrekturwerte bildet, die dem Rechner (16) und der Anzeige (17) zugeführt werden.

10. Einrichtung nach einem der Ansprüche 1 bis 9, dadurch gekennzeichnet, daß in einem Abstand zum ersten Schwingungs- oder Beschleunigungsnehmer (10) und zum Taster (3) ein zweiter Schwingungs- oder Beschleunigungsnehmer (24) montiert ist, dessen Ausgangssignale in einer zweiten Selektierstufe (25) verarbeitet werden und mit den Ausgangssignalen der ersten Selektierstufe (14) einer Blockierstufe (26) zugeführt werden, welche nur bei Vorliegen eines Signals aus der ersten Selektierstufe (14) und Fehlen eines Signals aus der zweiten Selektierstufe (25) den Datenfluß zwischen Speicher (13) und Rechner (16) freigibt.

## Claims

1. Apparatus for picking-up test data at test samples (4) using a mechanical sensor (3) elastically supported and moving relative to these test samples (4), at least one test data transmitter (10) coordinated to said sensor (3) and sensitive to position, and at least one incremental transducer (11) responsive to a relative movement of said test samples (4) and including a counter (9), said test data transmitter (10) generating a signal at the time of impact between sensor (3) and test sample (4), said signal being used to store the test data present at the incremental transducer (11) at the time of impact in a memory (13a, 13b), comprising: at least one vibration or acceleration pickup (10) as said test data transmitter mounted at said sensor (3), and a circuit (14) associated with said vibration or acceleration pickup (10), selecting any spurious signals from said test signal and controlling the data flow between said memory (13) and a subsequent computer (16).

2. Apparatus as claimed in claim 1, wherein said vibration or acceleration pickup (10) is a microphone.

3. Apparatus as claimed in claim 1, wherein said vibration or acceleration pickup (10) consists of a piezoelectric element.

4. Apparatus as claimed in claim 1, wherein a capacitive transducer is used as said vibration or acceleration pickup (10).

5. Apparatus as claimed in claim 1, wherein an inductive transducer is used as said vibration or acceleration pickup (10).

6. Apparatus as claimed in claim 1, wherein an optical transducer is used as said vibration or acceleration pickup (10).

7. Apparatus as claimed in one of the claims 1 through 6, wherein said vibration or acceleration pickup (10) is mounted in an angle of 45° to all the testing axes (x, y, z) of the sensor (3).

8. Apparatus as claimed in claim 1, wherein said circuit (14) consists of a first full-wave rectifier circuit (20), a summing amplifier (21) and a sequence control stage (22), and wherein the output signal of said vibration or acceleration pickup (10) is fed directly to said first full-wave rectifier circuit (18) and through a differentiator (19) to said second full-wave rectifier circuit (20); the outputs of said full-wave rectifier circuits (18, 20) are connected to the inputs of said summing amplifier (21) which is followed by said control sequence stage (22).

9. Apparatus as claimed in claims 1 and 8, wherein a switching stage (23) is additionally provided forming correction values from the output signal of said virbration or acceleration pickup (10) and the output signal of said summing amplifier (21), as well as from the speed data relating to the motion of the carriage (6) and the sensor (3); said correction values being fed to said computer (16) and to display means (17).

10. Apparatus as claimed in one of the claims 1 through 10, wherein a second vibration or acceleration pickup (24) is mounted at a spacing from the first vibration or acceleration pickup (10) and the sensor (3), the output signals of which being processed in a second selecting stage (25) and fed together with the output signals from the first selection stage (14) to a blocking stage (26) releasing the data flow between the memory (13) and the computer (16) only in the absence of a signal from the second selection stage (25).

## Revendications

1. Système pour la saisie de valeurs mesurées sur des éprouvettes (4), avec un palpeur mécanique (3) monté élastiquement et déplacable relativement aux éprouvettes (4), au moins un capteur (10) sensible à la position, associé à celui-ci décelant un mouvement relatif de l'éprouvette (4), avec un compteur (9) monté en aval, dans lequel système, un signal est produit par le capteur (10) sensible à la position, au moment de la rencontre du palpeur (3) et de l'éprouvette (4) et ce signal est ensuite utilisé pour la fixation, dans une mémoire (13, 13b), de la valeur de mesure sur le capteur de mesure (11) présente à l'instant de la rencontre, caractérisé en ce que sur le palpeur (3) est prévue, en tant que capteur sensible à la position, un capteur d'oscillations ou d'accélérations (10) auquel est associé un étage sélectif (14) qui sélectionne des signaux perturbateurs dans le signal de mesure et commande le flux de données, entre la mémoire (13) et un ordinateur (16) monté après celle-ci.

2. Système selon la revendication 1, caractérisé en ce que le capteur d'oscillations ou d'accélérations (10) est un microphone.

3. Système selon la revendication 1, caractérisé en ce que le capteur d'oscillations ou d'accélérations (10) consiste en un élément piezo-électrique.

4. Système selon la revendication 1, caractérisé en ce qu'un capteur capacitif est prévu en tant que capteur d'oscillations ou d'accélérations (10).

5. Système selon la revendication 1, caractérisé en ce qu'un capteur inductif est utilisé comme capteur d'oscillations ou d'accélérations (10).

6. Système selon la revendication 1, caractérisé en ce qu'un capteur optique est employé comme capteur d'oscillations ou d'accélérations (10).

7. Système selon l'une des revendications 1 à 6, caractérisé en ce que le capteur d'oscillations ou d'accélérations (10) est disposé en étant incliné à 45° sur tous les axes de mesure (x, y, z) du palpeur (3).

8. Système selon la revendication 1, caractérisé en ce que l'étage sélectif (14) se compose d'un premier circuit redresseur à deux alternances (18), d'un différenciateur (18), d'un second circuit redresseur à deux alternances (20), d'un amplificateur des sommation (21) et d'un étage de commande séquentielle (22), dans lequel le signal de sortie du capteur d'oscillations ou d'accélérations (10) est amené au premier circuit redresseur à deux alternances (20) après passage à travers le différenciateur (19) et dans lequel les sorties des circuits redresseurs à deux alternances (18, 20) sont connectées aux entrées de l'amplificateur de sommation après lequel l'étage de commande séquentielle (22) est monté.

9. Système selon les revendications 1 et 8, caractérisé en ce qu'il est prévu additionnellement un étage commutateur de commande (23) lequel, à partir du signal de sortie du capteur d'oscillations ou d'accélérations (10) et du signal de sortie de l'amplificateur de sommation (21) ainsi que de l'information de vitesse provenant du mouvement de la table (6) et du palpeur (3), forme des valeurs de correction qui sont amenées à l'ordinateur (16) et à l'affichage (17).

10. Système selon l'une des revendications 1 à 9, caractérisé en ce qu'à une certaine distance du premier capteur d'oscillations ou d'accélérations (10) et du palpeur (3) est monté un second capteur d'oscillations ou d'accélérations (24) dont les signaux de sortie sont traités dans un second étage sélectif (25) et sont amenés, avec les signaux de sortie du premier étage sélectif (14), à un étage de blocage (26) qui libère le flux de données entre la mémoire (13) et l'ordinateur (16), seulement lors de la présence d'un signal provenant du premier étage sélectif (14) et de l'absence d'un signal en provenance du second étage sélectif (25).

0 025 485

Fig. 1

Fig. 2

Ausgangssignal
Schwingungs- oder
Beschl.-Aufnehmer

Korrekturwert
zum Rechner

Fig. 3

7

Fig. 4